Europäisches Patentamt

European Patent Office

Office européen des brevets

(19)

(11) **EP 0 633 870 B1**

(12) **EUROPEAN PATENT SPECIFICATION**

(45) Date of publication and mention
of the grant of the patent:
**24.11.1999 Bulletin 1999/47**

(21) Application number: **93908886.0**

(22) Date of filing: **01.04.1993**

(51) Int Cl.[6]: **C04B 41/87**, C25C 3/08,
C25C 3/12

(86) International application number:
**PCT/EP93/00810**

(87) International publication number:
**WO 93/20026 (14.10.1993 Gazette 1993/25)**

(54) **PREVENTION OF OXIDATION OF CARBONACEOUS AND OTHER MATERIALS AT HIGH TEMPERATURES**

VERHINDERUNG DER OXYDATION VON KOHLENSTOFFHALTIGEM MATERIAL BEI HOHEN TEMPERATUREN

PREVENTION DE L'OXYDATION DE MATIERES CARBONEES OU AUTRES AUX TEMPERATURES ELEVEES

(84) Designated Contracting States:
**DE ES FR GB IT NL**

(30) Priority: **01.04.1992 US 861513**
**12.06.1992 US 898052**

(43) Date of publication of application:
**18.01.1995 Bulletin 1995/03**

(73) Proprietor: **MOLTECH Invent S.A.**
**2320 Luxembourg (LU)**

(72) Inventors:
  • **SEKHAR, Jainagesh A.**
    **Cincinnati, OH 45221-0012 (US)**
  • **DE NORA, Vittorio**
    **Nassau (BS)**

(74) Representative: **Cronin, Brian Harold John et al**
**c/o MOLTECH S.A.**
**9, Route de Troinex**
**1227 Carouge/GE (CH)**

(56) References cited:
**EP-A- 0 102 186**       **EP-A- 0 134 769**
**WO-A-92/00399**         **US-A- 3 348 929**
**US-A- 4 921 731**

• **CHEMICAL ABSTRACTS, vol. 114, no. 8, 25
February 1991, Columbus, Ohio, US; abstract
no. 67830m, E. UDAGAWA 'Formation of
titanium diboride sintered layer on ceramic or
metal substrates' page 366 ;**

Printed by Jouve, 75001 PARIS (FR)

## Description

<u>Field of the Invention</u>

The invention relates to bodies of materials such as, for example, carbonaceous materials, for use in corrosive environments such as oxidising media or gaseous or liquid corrosive agents at elevated temperatures, coated with a protective surface coating which improves the resistance of the bodies to oxidation or corrosion and which may also enhance the electrical conductivity and/or electrochemical activity of the body.

<u>Background of the Invention</u>

Carbonaceous materials are important engineering materials used in diverse applications such as aircraft bodies, electrodes, heating elements, structural materials, rocket nozzles, metallurgical crucibles, pump shafts, furnace fixtures, sintering trays, induction furnace susceptors, continuous casting dies, ingot molds, extrusion canisters and dies, heat exchangers, anodes, high temperature insulation (porous graphite), gas diffusers, aerospace structural materials, bearings, substrates in electronics industry, brazing and joining fixtures, diamond wheel molds, nozzles, glass molds etc. Although carbonaceous materials have properties which make them useful for the applications mentioned above, the resistance to oxidation is one property which has limited the use of these materials. Much effort is therefore underway to improve the resistance to oxidation of such materials.

US patent 4,921,731 discloses a substrate coated with a ceramic coating. The coating is applied from a colloidal slurry and may contain reactant or non-reactant, non-colloidal particulate.

Traditional methods of preventing oxidation of carbonaceous materials have involved the deposition of adherent and highly continuous layers of materials such as silicon carbide or metals such as aluminum. The deposit of such materials has normally been carried out by techniques such as vapor deposition (both PVD and CVD) or by electrochemical methods. Vapor deposition is an extremely slow and costly process and additionally may not be carried out for large parts such as electrodes. It is also known to plasma spray alumina/aluminium onto the sides of carbon anodes used as anodes for aluminium electrowinning, but this coating method is expensive. Other techniques such as electrochemical methods are limited in the type of materials that may be applied as coatings and size limitations again may be present. Sol-gel techniques are known for the application of coatings. However, it is well known that these techniques are not adequate for oxidation protection, because they produce extremely thin films, usually of the order of 1 micrometer thick, that are most often porous and have a tendency to delaminate especially under conditions of thermal expansion mismatch with the substrate.

Therefore, there is a need for developing a cost effective versatile method for coating carbonaceous materials with an adherent coating that will effectively prevent oxidation and the loss of the carbonaceous substrate because of rapid or slow burning.

<u>Summary of the Invention</u>

According to the invention, a protective coating on a body of carbonaceous or other material which improves the resistance of the body to oxidation, and which may also enhance the bodies electrical conductivity and/or its electrochemical activity is applied from a colloidal slurry containing particulate reactant or non-reactant substances, or a mixture of particulate reactant and non-reactant substances, which when the body is heated to a sufficient elevated temperature form the protective coating by reaction sintering and/or by sintering without reaction.

The coatings of the invention are "thick" coatings, of the order of tens of micrometers thick, and contain refractory particulate materials which adjust to the thermal expansion mismatch and, in most embodiments, after sintering or oxidation during use, are able to provide a continuous thick silica layer for oxidation prevention.

The invention is particularly advantageous when the body is made of carbonaceous material, for instance petroleum coke, metallurgical coke, anthracite, graphite, amorphous carbon, fulerene such as fulerene $C_{60}$ or $C_{70}$ or of a related family, low density carbon or mixtures thereof. The coatings are particularly adherent on carbon substrates because the high surface activity bonds the particles to the carbon.

It is advantageous for bodies of low-density carbon to be protected by the coating of the invention, for example if the component is exposed to oxidising gas released in operation of an electrolytic cell, or also when the substrate is part of a cell bottom. Low density carbon embraces various types of relatively inexpensive forms of carbon which are relatively porous and very conductive, but hitherto could not be used successfully in the environment of aluminium production cells on account of the fact that they were subject to excessive corrosion or oxidation. Now it is possible by coating these low density carbons according to the invention, to make use of them in these cells instead of the more expensive high density anthracite and graphite, taking advantage of their excellent conductivity and low cost.

The invention also concerns coated bodies with substrates of a metal, alloy, intermetallic compound or refractory material, to which the protective coating is applied.

Two types of coatings have been developed and are described in this application. One will be called the micropyretic type and the other the non-micropyretic type. Micropyretic coatings contain combustible materials which provide heat during combustion and also add desired constituents to the coating after combustion of the coating. The non-micropyretic type does not contain any combustible. Mixtures of micropyretic and non-micropyretic coatings are also possible. Both coatings involve the application of a colloidal slurry which is applied to the substrate by painting, spraying, dipping or pouring onto the substrate. When several layers of such coatings are applied, it is possible that some may contain micropyretic constituents and some may not.

Thus, the applied colloidal slurry may contain micropyretic particulate reactant substances which undergo a sustained micropyretic reaction to produce for example refractory borides, silicides, nitrides, carbides, phosphides, oxides, aluminides, metal alloys, intermetallics, and mixtures thereof, of titanium, zirconium, hafnium, vanadium, silicon, niobium, tantalum, nickel, molybdenum and iron, the micropyretic reactant substances being finely divided particulates including elements making up the refractory material produced.

Such micropyretic reactant substances may for instance comprise particles, fibers or foils of Ni, Al, Ti, B, Si, Nb, C, $Cr_2O_3$, Zr, Ta, $TiO_2$, $B_2O_3$, Fe, Mo or combinations thereof.

It is essential to use colloids and mixtures of colloids for application of the coatings. Three types of colloidal processing are possible. The first involves the gelation of certain polysaccharide solutions. This, however, is relatively unimportant to this invention. The other two which involve colloids and metal organic compounds are relevant to this invention. These two involve the mixing of materials in a very fine scale. Colloids are defined as comprising a dispersed phase with at least one dimension between 0.5nm (nanometer) and about 10 micrometers in a dispersion medium which in our case is a liquid. The magnitude of this dimension distinguishes colloids from bulk systems in the following way : (a) an extremely large surface area and (b) a significant percentage of molecules reside in the surface of colloidal systems. Up to 40% of molecules may reside on the surface. The colloidal systems which are important to this invention are both the thermodynamically stable lyophylic type (which include macromolecular systems such as polymers) and the kinetically stable lyophobic type (those that contain particles).

Insoluble oxides in aqueous suspension develop surface electric charges by surface hydroxylation followed by dissociation of surface hydroxyl groups. Typical equations could be :

$$M(OH) \text{ surface} + H_2O \Leftrightarrow MO^- \text{ surface} + H_3O^+$$

$$M(OH) \text{ surface} + H_2O \Leftrightarrow M(OH_2)^+ \text{ surface} + OH^-$$

where M represents a metal or a complex cation.

Such surface charges and the London and Van der Waals forces keep the particles from agglomerating. An adsorbed layer of material, polymer or surface active agent, modifies the interaction of particles in several ways. In the mixing process described below we introduce new materials and other agents into the colloids.

Colloids may form through cation hydrolysis. Many metal ions are subject to hydrolysis because of high electronic charge or charge density. Initial products of hydrolysis can condense and polymerize to form polyvalent metal or polynuclear ions, which are themselves colloidal. Charge and pH determine the ligands for central cations and the anion/cation ratio controls the degree of polymerization and stability of the suspension. The pH could vary from 0-14. A wide range of polynuclear cationic hydrolysis products may exist with charge from 2+ to 6+. Polynuclear anionic hydrolysis products could also have a wide range of charges.

The formation of colloids involves a starting material for example a reagent grade metal salt which is converted in a chemical process to a dispersible oxide which forms the colloidal solution on addition of dilute acid or water. Removal of water (drying) and or removal of the anions from the colloidal solution produces a gel like product. In the method of the invention for oxidation resistant coatings, the colloid thus acts as a binder to the other additives and also densifies the product formed. The calcination process in air yields an oxide product after decomposition of salts whereas carbon, silicon, boron etc. may be added to the colloid to yield a non oxide ceramic in the coating. The colloidal solutions may also be blended.

The colloidal carrier - usually colloidal alumina, colloidal ceria, colloidal silica, colloidal yttria or colloidal monoaluminium phosphate and usually in an aqueous medium - has been found to assist in moderating the micropyretic reaction and to considerably improve the properties of the coating whether produced by reaction sintering or non-reactive sintering. It is however not necessary for all of the applied layers of the slurry to have a colloidal carrier. Excellent results have been obtained using some slurries with a colloidal carrier and others with an organic solvent. Combinations of a colloidal carrier in aqueous medium and an organic solvent have also worked well.

In the case of micropyretic coatings an additional step after the drying of the applied slurry on the coating will be the firing (combustion) of the constituents of the slurry by direct flame, concentrated sunlight, plasma, laser, electron beam or by traditional methods such as passing a current through the conductive substrate or placing the coated article inside a furnace at a predetermined temperature or by heating the coating by an induction method or by radiant heating.

The applied colloidal slurry contains particulate substances which sinter above a given temperature, in particular reactant and/or non-reactant substances like silicon carbide that reaction sinter and/or sinter without reaction above 900°C. The coating may be pre-formed prior to use, in which case the reactant and/or non-reactant substances have been reaction sintered and/or sintered without reaction to provide an adherent coating on the body prior to use. Alternatively, the micropyretic reaction sintering or the non-reactive sintering may take place only when the body coated with the coating components is used at high temperature.

When use of a silicon-carbide-containing coating is contemplated at temperatures below 900°C then normally micropyretic coatings are preferred; when use is contemplated at above 900°C then non-micropyretic coatings are also acceptable. This is because the coatings become effective after they sinter. Above 900°C, sintering may occur during exposure to the service conditions at the high temperature. Below 900°C the micropyretic reaction and the combustion initiation process will provide the required heat for the sintering operation. Nevertheless it remains possible to sinter non-micropyretic coatings above 900°C and then use them below 900°C.

In-situ repair of coatings during use is also contemplated by both types of coatings.

The constituents of the slurries are :

(a) A carrier, chosen from colloidal liquids which could be colloidal alumina, colloidal ceria, colloidal yttria, colloidal silica, colloidal zirconia or mono-aluminum phosphate or colloidal cerium acetate or mixtures thereof.

(b) A powder additive containing carbides, silicides, borides, nitrides, oxides, nitrides, carbonitrides, oxynitrides, boric acid and its salts, and combinations of these. When choosing combinations of powder additives the particle size selection is of importance. It is preferable to choose particle size below 100 microns and, when employing combinations of powder additives, to choose particle sizes which are varied such that the packing of particles is optimized. For example when choosing a composition containing mostly SiC and some $MoSi_2$ it is preferable to choose the particle size of the $MoSi_2$ much smaller (at least three times smaller) than the SiC. Generally, the ratio of the particle sizes will be in the range from 2:1 to 5:1, preferably about 3:1, for instance with large particles in the range 15 to 30 micrometers and small particles in the range 5 to 10 micrometers.

(c) Metallic particles such as for example Ni, Pt, Al, Cr or intermetallic particles such as for example NiAl, $NiAl_3$, CrSi, CrB etc. or combinations thereof, in which case the particle sizes will be varied to achieve optimum packing, as for powder additives.

(d) Micropyretic agents. These agents are particles, fibers or foils of materials such as Ni, Al, Ti, B, Si, Nb, C, $Cr_2O_3$, Zr, Ta, $TiO_2$, $B_2O_3$, Fe, Mo or combinations which may react to yield heat as well as yielding clean and nascent products from the combustion. Typical reactions could be for example $Cr_2O_3+2Al+2B$ which reacts spontaneously to give $CrB_2$ and $Al_2O_3$ with a large release of heat. The adiabatic temperature of such a micropyretic reaction is 6500°K. Tables I, II and III give a partial listing of examples of micropyretic reactions and products and the amount of heat released in each reaction. $\Delta H$(KJ/mole) is the enthalpy release for the reaction and $T_{ad}$ K is the adiabatic temperature (°K) which is expected to be reached in such reactions.

TABLE I -

| FORMATION OF REFRACTORY COMPOUNDS | | |
|---|---|---|
| **REACTION** | **$\Delta H$(KJ/mole)** | **Tad K** |
| Ti + 2B = TiB$_2$ | - 293.00 | 3190 |
| Zr + 2B = ZrB$_2$ | - 263.75 | 3310 |
| Nb + 2B = NbB$_2$ | - 207.74 | 2400 |
| Ti + B = TiB | - 158.84 | 3350 |
| Hf + 2B = HfB$_2$ | - 310.15 | 3520 |
| Ta + 2B = TaB$_2$ | - 193.53 | 3370 |
| Ti + C = TiC | - 232.00 | 3210 |

TABLE II -

| FORMATION OF INTERMETALLICS | | |
|---|---|---|
| REACTION | $\Delta$H(KJ/mole) | Tad K |
| Ti + Ni = TiNi | - 66.5 | 1773 |
| Ti + Pd = TiPd | - 103.4 | 1873 |
| Ni + Al = NiAl | - 118.4 | 1923 |
| Ti + Al = TiAl | - 72.8 | 1734 |
| Ti + Fe = TiFe | - 40.6 | 1423 |

TABLE III -

| FORMATION OF COMPOSITES | | |
|---|---|---|
| REACTION | $\Delta$H(KJ/mole) | Tad K |
| $Fe_2O_3+2Al = Al_2O_3+2Fe$ | - 836.00 | 3753 |
| $Cr_2O_3+2Al = Al_2O_3+2Cr$ | - 530.00 | 2460 |
| $2Cr_2O_3+6Al+6C = 2Cr_2C_3+3Al_2O_3$ | | 6500 |
| $0.86Ti+1.72B+1.48Al = 0.86TiB_2+1.48Al$ | - 293.00 | 1450 |
| $Ti+C+0.68Ni = TiC+0.68Ni$ | -232.00 | 1370 |
| $Zr+2B+Cu = ZrB_2+Cu$ | - 263.75 | 1100 |

(e) Metal organic compounds principally metal alkoxides of the general formula $M(OR)_z$ where M is a metal or complex cation made up of two or more elements, R is an alkyl chain and z is a number usually in the range 1 to 12, or alternatively described as solutions in which molecules in which organic groups are bound to a metal atom through oxygen. Examples are silicon tetraisomyloxide, aluminum butoxide, aluminum isopropoxide, tetraethyl orthosilicates, etc. Formates, acetates and acetylacetonates are also considered in this category.

(f) Pyrolizable chlorosilanes, polycarbosilanes, polysilazanes and other organosilicon polymers as binders which pyrolize to useful products for oxidation prevention. Such compounds are expected to participate in the micropyretic reaction in a beneficial but complex manner to increase the yield of useful product with a morphology and size which assists in making the coating more adherent and tight.

(g) Buffer solutions to modify the pH of the slurry. These are standard laboratory grade alkalines or acids.

(h) Binding agents such as methyl cellulose, clays like kaolinite, polyvinyl butyral, fused silica and activators, etc.

Considering the above defined constituent groups (a) to (h), the slurries used in the invention are made up of at least one of the additives from groups (b), (c) and/or (d) in a colloidal carrier from group (a), optionally together with one or more components from groups (e) to (h). Some materials may be present under more than one heading. For instance silica or alumina in colloidal form can be included in the carrier, and in powder form as additive. Particulate nickel and aluminium can be present as a micropyretic reactant, but in excess of the stoichiometric amount, whereby the excess forms a particulate additive. It is also possible for the powder additive to be the same as the reaction product of the micropyretic reaction.

The non-reactant substances may comprise antioxidant or oxidation prevention materials such as boric acid and its salts, and fluorides; bonding enhancing materials such as methyl-cellulose, particulate alumina or urea; metallic, intermetallic, semi-metallic, polymeric, refractory and/or ceramic materials such as borides, carbides, nitrides, silicides, oxides, oxynitrides and mixtures thereof; pyrolizable chlorosilanes, polycarbosilanes, polysilanes and other organometal polymers which pyrolize to useful products for oxidation prevention or enhancing bonding, or their pyrolized products: thermosetting resins; thermoplastic resins; and mixtures thereof.

Examples of thermosetting resins are epoxides, phenolic resins and polyimides. Examples of thermoplastic resins are polycarbonates, eg. Lexan™, polyphenylene sulfides, polyether ether ketones, polysulfones, eg. Udel™, polyetherimides and polyethersulfones.

The coating advantageously contains at least one silicon-containing compound, which may be included as a reactant and/or as a non-reactant, advantageously in a substantial amount, usually accounting for 30wt% or more of the coating, advantageously 50wt% or more. Silicon compounds when reacted or sintered form on the body a relatively impervious silica skin, providing excellent resistance against oxidation and corrosion. Formation of such a silicous skin can be enhanced by including colloidal silica in the carrier.

The applied coating for instance contains at least one carbide, nitride, boride or oxide of silicon or combinations thereof, in combination with at least one silicide of titanium, zirconium, hafnium, vanadium, niobium,, tantalum, nickel, molybdenum, chromium and iron, or a combination of at least two carbides, nitrides, borides or oxides of silicon. One particularly advantageous combination includes silicon carbide with molybdenum silicide. Another includes silicon carbide with silicon nitride. These silicon-based combinations can be used alone or in combination with other silicon or non-silicon non-reactants or with micropyretic reactants, and particularly with colloidal silica in the carrier. When such coatings are sintered before use in an oxidising atmosphere, or when such coatings are used in an oxidsing atmosphere, the coatings are converted to produce a relatively impervious silica skin.

The invention is useful for protecting the various engineering materials made of carbon listed at the outset. A main application of the invention is however for the protection of components of electrochemical cells for molten salt electrolysis which components in use are exposed to a corrosive atmosphere, or to a molten salt electrolyte, such as cryolite, and/or to a product of electrolyis in the cell. Such components are thus coated with a protective surface coating which improves the resistance of the components to oxidation or corrosion and which may also enhance the electrical conductivity and/or electrochemical activity. The protective coating is applied from a colloidal slurry containing particulate reactant or non-reactant substances, or a mixture of particulate reactant and non-reactant substances, which when the component is heated to a sufficient elevated temperature, prior to or upon insertion in the cell, form the protective coating by reaction sintering and/or by sintering without reaction.

Such components may have a carbonaceous substrate, or a substrate of a metal, alloy, intermetallic compound or refractory material, to which the protective coating is applied. The component may be a cathode or a cathode current feeder, an anode or an anode current feeder, eg. for a Hall-Héroult cell, or a bipolar electrode for new cell designs.

The invention is particularly applicable to components which are exposed to corrosive or oxidising gas released in operation of the cell or present in the cell operating conditions, the component comprising a substrate of carbonaceous material (particularly low-density carbon), refractory material or metal alloy that is subject to attack by the corrosive or oxidising gas and is protected from corrosion or oxidation by the protective surface coating.

The invention also concerns a method of improving the resistance to oxidation or corrosion of a body of material for use in corrosive environments such as oxidising media or gaseous or liquid agents at elevated temperatures, the body being in particular a component of an electrochemical cell for molten salt electrolysis which component in use is exposed to a corrosive atmosphere, or to a molten salt electrolyte and/or to a product of electrolyis in the cell. This method comprises applying to the body a protective coating from a colloidal slurry containing reactant or non-reactant substances, or a mixture of reactant and non-reactant substances, followed by heating the body prior to or during use to a sufficient temperature to cause the reactant and/or non-reactant substances to reaction sinter and/or to sinter without reaction to form an adherent protective coating.

The method of application of the slurry involves painting (by brush or roller), dipping, spraying, or pouring the liquid onto the substrate and allowing for drying before another layer is added. The coating need not entirely dry before the application of the next layer. However if one or more layers with micropyretic constituents are present, then it is preferable to dry completely prior to firing. Layers may be added to already fired coatings either for repair or for additional build up. Even when micropyretic constituents are absent, it is preferred to heat the coating with a suitable heat source such as a torch (butane or oxyacetylene), a laser, a furnace, etc., so as to improve densification of the coating. Heating takes place preferably in air but could be in other oxidising atmospheres or in inert or reducing atmospheres.

The substrate may be treated by sand blasting or pickled with acids or fluxes such as cryolite or other combinations of fluorides and chlorides prior to the application of the coating. Similarly the substrate may be cleaned with an organic solvent such as acetone to remove oily products and other debris prior to the application of the coating. These treatments will enhance the bonding of the coatings to the substrate.

After coating the substrate applied by dipping, painting, spraying or combinations of such techniques in single or multi-layer coatings and drying, a final coat of one or more of the liquids listed in (a) - (e) may be applied lightly prior to use. More generally, after fabrication and before use, the body can be painted, sprayed, dipped or infiltrated with reagents and precursors, gels and/or colloids.

Examples of non-micropyretic slurries and micropyretic slurries are given in Table IV and Table V respectively.

EP 0 633 870 B1

<u>TABLE IV – EXAMPLES OF NON-MICROPYRETIC SLURRIES</u>

| Sample | Composition Powder (w%) / Particle Size | | | | | Carrier, vol% | Powder/ Carrier g/ml |
|---|---|---|---|---|---|---|---|
| | -200mesh | <10microns | -325mesh | -325mesh | -325mesh | | |
| 1 | SiC 97.5% | $Si_3N_4$ 2.5% | – | – | – | Coll-Silica 50% Coll-Alumina 50 % | 10/6 |
| 2 | SiC 90% | $Si_3N_4$ 10% | – | – | – | Coll-Alumina 100% | 10/6 |
| 3 | SiC 90% | $Si_3N_4$ 10% | – | – | – | Coll-Silica 100% | 10/6 |
| 4 | SiC 90% | – | $Y_2O_3$ 10% | – | – | Coll-Alumina 100% | 10/6 |
| 5 | SiC 90% | – | $Y_2O_3$ 10% | – | – | Coll-Silica 100% | 10/6 |
| 6 | SiC 92.5% | $Si_3N_4$ 2.5% | $Y_2O_3$ 5% | – | – | Coll-Silica 50% Coll-Alumina 50 % | 10/6 |
| 7 | SiC 90% | $Si_3N_4$ 10% | – | – | – | Coll-Yttria 100% | 10/5 |
| 8 | SiC 90% | $Si_3N_4$ 10% | – | – | – | Coll-Ceria 100% | 10/5 |
| 9 | SiC 90% | $Si_3N_4$ 5% | $Y_2O_3$ 2.5% | $Al_2O_3$ 2.5% | – | Coll-Silica 100% | 10/5 |
| 10 | SiC 85% | $Si_3N_4$ 5% | $Y_2O_3$ 2.5% | $Al_2O_3$ 2.5% | $TiB_2$ 5% | Coll-Silica 100% | 10/5 |
| 11 | SiC 85% | $Si_3N_4$ 5% | $Y_2O_3$ 2.5% | $SiO_2$ 2.5% | $TiB_2$ 5% | Coll-Alumina 100% | 10/5 |
| 12 | SiC 90% | $MoSi_2$ 5% | $Y_2O_3$ 2.5% | $Al_2O_3$ 2.5% | – | Coll-Silica 100% | 10/5 |
| 13 | SiC 85% | $MoSi_2$ 5% | $Y_2O_3$ 2.5% | $Al_2O_3$ 2.5% | $TiB_2$ 5% | Coll-Silica 100% | 10/5 |
| 14 | SiC 85% | $MoSi_2$ 5% | $Y_2O_3$ 2.5% | $SiO_2$ 2.5% | $TiB_2$ 5% | Coll-Alumina 100% | 10/5 |
| 15 | SiC 80% | $MoSi_2$ 10% | $Y_2O_3$ 10% | – | – | Coll-Silica 100% | 10/5 |
| 16 | SiC 70% | $MoSi_2$ 20% | $Y_2O_3$ 2.5% | $Al_2O_3$ 2.5% | $TiB_2$ 5% | Coll-Silica 100% | 10/5 |

7

The invention will be further described with reference to the following examples.

Example I

A non-micropyretic slurry corresponding to sample 9 of Table IV was applied to a graphite block 4cm X 4cm X 6cm by painting to build up a layer of approximately 500 micrometers. This block along with an uncoated block were placed in a furnace under air at 1000°C. The uncoated block completely burnt in 24 hours. The coated block showed a weight loss of 5% after an exposure of 27 hours. The coating was noted to remain very stable and adherent. Scanning electron microscope pictures of the coating before and after the exposure show that the coating self densified to protect the carbonaceous substrate.

Example II

The test of Example I was repeated but with a micropyretic slurry corresponding to sample 10 of Table V applied as the coating. The coated sample when placed in the furnace was noted to ignite. The weight loss after a 27 hour test was 8%.

Example III

A combination of a micropyretic slurry and a non-micropyretic slurry was applied to a graphite substrate in the following manner. A slurry corresponding to sample 13 of Table IV was applied by painting and allowed to build up to 600 microns by applying several coats. Next a micropyretic slurry was applied. This slurry corresponded to sample 11 of Table V except that the SiC powder size was chosen to be 1 micron. This slurry was built up to approximately 500 microns in thickness, thus making the total thickness of the coating to be 1.1 mm. The micropyretic slurry-deposited layer was then successfully fired by an oxyacetylene torch.

TABLE V - EXAMPLES OF MICROPYRETIC SLURRIES

| Sample | Composition Powder (w%) / Particle Size | | | | | Carrier, vol% | Powder/ Carrier g/ml |
|---|---|---|---|---|---|---|---|
| | -200mesh | <10microns | -325mesh | -325mesh | -325mesh | | |
| 1 | SiC 60% | Si$_3$N$_4$ 10% | Ti 17% | B 8% | TiB$_2$ 5% | Coll-Silica 50% Coll-Alumina 50 % | 10/6 |
| 2 | SiC 50% | Si$_3$N$_4$ 8% | Ti 25% | B 10% | TiB$_2$ 7% | Coll-Alumina 100% | 10/6 |
| 3 | SiC 50% | Si$_3$N$_4$ 7% | TiO$_2$ 25% | B$_2$O$_3$ 15% | Al 3% | Coll-Silica 100% | 10/6 |
| 4 | SiC 50% | TiB$_2$ 10% | Y$_2$O$_3$ 8% | Ni 22% | Al 10% | Coll-Ceria Acetate 100% | 10/6 |
| 5 | SiC 50% | ZrB$_2$ 5% | Y$_2$O$_3$ 2% | Ti 20% | Ni 23% | Coll-Silica 100% | 10/6 |
| 6 | SiC 72.5% | Si$_3$N$_4$ 2.5% | Y$_2$O$_3$ 5% | Ti 15% | Si 5% | Coll-Silica 50% / Coll-Alumina 50 % | 10/6 |
| 7 | SiC 80% | Si$_3$N$_4$ 5% | Cr$_2$O$_3$ 10% | Al 3% | C 2% | Coll-Yttria 100% | 10/5 |
| 8 | SiC 50% | Si$_3$N$_4$ 10% | Ti 28% | C 7% | BaO 5% | Coll-Ceria Acetate 100% | 10/5 |
| 9 | SiC 50% | Si$_3$N$_4$ 5% | Ti 26% | Al$_2$O$_3$ 3% | Al 16% | Polycarbosilane 20% Coll-Silica 80% | 10/5 |
| 10 | SiC 40% | Si$_3$N$_4$ 5% | Y$_2$O$_3$ 5% | Ti 37% | Si 13% | Coll-Silica 100% | 10/5 |
| 11 | SiC 45% | Si$_3$N$_4$ 7.5% | Ti 30% | SiO$_2$ 2.5% | B 15% | Coll-Alumina 100% | 10/5 |
| 12 | SiC 90% | Zr 4% | Y$_2$O$_3$ 2.5% | Al$_2$O$_3$ 2.5% | B 1% | Mono-Al-Phosphate 100% | 10/5 |
| 13 | SiC 85% | MoSi$_2$ 5% | Y$_2$O$_3$ 2.5% | Al$_2$O$_3$ 2.5% | TiB$_2$ 5% | Coll-Silica 100% | 10/5 |
| 14 | SiC 85% | MoSi$_2$ 5% | Y$_2$O$_3$ 2.5% | SiO$_2$ 2.5% | TiB$_2$ 5% | Coll-Alumina 100% | 10/5 |
| 15 | SiC 80% | MoSi$_2$ 5% | Y$_2$O$_3$ 10% | Ti 8% | C 2% | Tetraisomyloxide 20% Coll-Silica 80% | 10/5 |
| 16 | SiC 68% | MoSi$_2$ 20% | Cr$_2$O$_3$ 2.5% | Al 7% | C 2.5% | Coll-Silica 100% | 10/5 |

EP 0 633 870 B1

Example IV

A slurry was made containing 40% by volume of sample 1 of the non-micropyretic slurries in Table IV and 40% by volume of sample 1 of the micropyretic slurries in Table V. To this was added 5 % by volume of cerium acetate (alkoxide), 5% by volume of polysilazanes, 2% buffer solution of pH 10, 3% methyl cellulose and 5% by volume colloidal zirconia. This coating was applied to an anthracite substrate. After drying, the micropyretic slurry-deposited layer was successfully fired by an oxyacetylene torch.

Example V

A slurry was made containing 25gm of TiB2 (particle size 10 microns) and 15 ml colloidal alumina, 10 g titanium (particle size 44 microns) and 5 g boron (particle size 44 microns). This was then coated on a graphite block as in Example I and subjected to the same test conditions. After 27 hours the loss in weight was 5%. The coating had changed in color from black to yellow after 27 hours but remained adherent and protective of the graphite.

Example VI

Example I was repeated but a small crack was noted to be present at the corner of the rectangular graphite piece. After a 27 hour test it was noted that a substantial part of the graphite had now burnt by the passage of air through the crack. Another similar test was repeated with a crack, but the sample was removed from the furnace after 1 hour and the crack was healed by the application of the same coating. After 27 hours the sample was noted again to have been protected, thus showing that cracks may be healed if discovered early.

Example VII

The slurry of Example IV was mixed with carbon black in the ratio 6ml of slurry to 1 g of carbon black. This was applied to a graphite block. Further, after drying, the sample was dipped in a mono-aluminum phosphate (MAP) solution and allowed to dry again. The entire assembly was then placed in a furnace at 1000°C under air. After 27 hours the coating was noted to remain protective of the substrate.

**Claims**

1. A body of carbonaceous material or of a metal, alloy, intermetallic compound or refractory material, for use in corrosive environments such as oxidising media or gaseous or liquid corrosive agents at elevated temperatures, coated with a sintered protective surface coating which improves the resistance of the body to oxidation or corrosion and which may also enhance the bodies electrical conductivity and/or its electrochemical activity, in which the sintered protective coating is applied from a slurry comprising a colloidal carrier selected from silica, colloidal alumina, colloidal yttria, colloidal ceria, colloidal thoria, colloidal zirconia, colloidal magnesia, colloidal lithia and mixtures thereof, the slurry further containing particulate reactant or non-reactant substances, or a mixture of particulate reactant and non-reactant substances, which reactant substances react to produce refractory borides, silicides, nitrides, carbides, phosphides, oxides, aluminides, metal alloys, intermetallics, and mixtures thereof, of titanium, zirconium, hafnium, vanadium, silicon, niobium, tantalum, nickel, molybdenum and iron, said reactant substances comprising finely divided particulates comprising elements making up the refractory material produced, and which non-reactant substances comprise refractory and/or ceramic borides, carbides, nitrides, silicides, oxides, oxynitrides and mixtures thereof, which reactant and/or non-reactant substances have been reaction sintered and/or sintered without reaction by heating the body to a sufficient elevated temperature form the sintered protective coating by reaction sintering and/or sintering without reaction.

2. A coated body according to claim 1, in which the body is made of carbonaceous material.

3. A coated body according to claim 2, in which the carbonaceous material is selected from petroleum coke, metallurgical coke, anthracite, graphite, amorphous carbon, fullerene, low density carbon or mixtures thereof.

4. A coated body according to claim 1, obtained from an applied slurry which contains micropyretic reactant substances which undergo a sustained micropyretic reaction.

5. A coated body according to any preceding claim, obtained from micropyretic reactant substances comprising particles, fibers or foils of Ni, Al, Ti, B, Si, Nb, C, $Cr_2O_3$, Zr, Ta, $TiO_2$, $B_2O_3$, Fe, Mo or combinations thereof.

6. A coated body according to claim 1, in which the applied slurry contains non-reactant substances which sinter above a given temperature.

7. A coated body according to claim 1, in which the non-reactant substances further comprise antioxidant or oxidation prevention materials such as boric acid and its salts, and fluorides; bonding enhancing materials such as methyl-cellulose, particulate alumina or urea; metallic, intermetallic, semi-metallic or polymeric materials; pyrolizable chlorosilanes, polycarbosilanes, polysilanes and other organometal polymers which pyrolize to useful products for oxidation prevention or enhancing bonding, or their pyrolized products; thermosetting resins; thermoplastic resins; and mixtures thereof.

8. A coated body according to claim 7, containing metallic particles of Ni, Pt, Al, Cr or intermetallic particles selected from NiAl, $NiAl_3$, CrSi, CrB, or combinations thereof.

9. A coated body according to claim 1, in which the non-reactant substances are particulates with a particle size below 100 microns.

10. A coated body according to claim 9, in which different non-reactant particulate substances have different particle sizes which optimize packing of the particles, with particle size ratios in the range from 2:1 to 5:1, preferably about 3:1.

11. A coated body according to claim 1, in which the coating contains at least one silicon-containing compound.

12. A coated body according to claim 11, in which the coating contains at least one carbide, nitride, boride or oxide of silicon or combinations thereof, in combination with at least one silicide of titanium, zirconium, hafnium, vanadium, niobium, tantalum, nickel, molybdenum, chromium and iron, or a combination of at least two carbides, nitrides, borides or oxides of silicon.

13. A coated body according to claim 12, in which the coating contains silicon carbide and molybdenum silicide or silicon carbide and silicon nitride.

14. A coated body according to any preceding claim, in which the colloidal slurry is derived from colloid precursors and reagents which are solutions of at least one salt such as chlorides, sulfates, nitrates, chlorates, perchlorates or of metal organic compounds such as alkoxides, formates, acetates of silicon, aluminium, yttrium, cerium, thorium zirconium, magnesium, lithium and other metals and mixtures thereof.

15. A coated body according to claim 14, in which the colloid precursor or colloid reagent contains a chelating agent such as acetyl acetone or ethylacetoacetate.

16. A coated body according to claim 14, in which the solutions of metal organic compounds, principally metal alkoxides, are of the general formula $M(OR)_z$ where M is a metal or complex cation, R is an alkyl chain and z is a number from 1 to 12.

17. A component of an electrochemical cell for molten salt electrolysis which component in use is exposed to a corrosive atmosphere, or to a molten salt electrolyte and/or to a product of electrolyis in the cell, the component comprising a coated body as claimed in any preceding claim.

18. An electrochemical cell component according to claim 17, which is a cathode or a cathode current feeder.

19. An electrochemical cell component according to claim 17, which is an anode or an anode current feeder.

20. An electrochemical cell component according to claim 17, which is a bipolar electrode.

21. An electrochemical cell component according to claim 17, wherein the component in operation of the cell is exposed to corrosive or oxidising gas released in operation of the cell or present in the cell operating conditions, said component comprising a substrate of carbonaceous material, refractory material or metal alloy that is subject to attack by the corrosive or oxidising gas and is protected from corrosion or oxidation by the protective surface coating.

22. An electrochemical cell component according to claim 21, wherein the component has a substrate of low-density carbon protected by the refractory material.

23. A method of producing the coated body of any one of claims 1 to 16, or the component of an electrochemical cell of any one of claims 17 to 22, the method comprising applying to the body a protective coating from said slurry containing said particulate reactant or non-reactant substances, or a mixture of said particulate reactant and non-reactant substances in said colloidal carrier, followed by heating the body prior to or during use to a sufficient temperature to cause the reactant and/or non-reactant substances to reaction sinter and/or to sinter without reaction to form the adherent sintered protective coating.

24. A method according to claim 23, in which the reactant and/or non-reactant substances are reaction sintered and/or sinter without reaction above 900°C.

25. A method according to claim 23, in which the reactant and/or non-reactant substances are reaction sintered and/or sintered without reaction to provide an adherent coating on the body prior to use.

26. A method according to claim 23, 24 or 25 in which the coating is applied by dipping the body in a solution, painting, spraying or combinations of such application techniques, in single or multi-layer coatings.

27. A method according to any one of claims 23 to 26, in which the body is further painted, sprayed, dipped or infiltrated with reagents and precursors, gels and/or colloids.

28. A method according to claim 23 of protecting a carbonaceous component of an electrochemical cell for molten salt electrolysis which component in use is exposed to a corrosive atmosphere, or to a molten salt electrolyte and/or to a product of electrolyis in the cell, comprising applying to the component a protective coating from said slurry containing particulate reactant or non-reactant substances in said colloidal carrier, or a mixture of particulate reactant and non-reactant substances, followed by heating the component prior to or during use to a sufficient temperature to cause the reactant and/or non-reactant substances to reaction sinter and/or to sinter without reaction to form an adherent sintered protective coating.

**Patentansprüche**

1. Körper aus kohlenstoffhaltigem Material oder aus einem Metall, einer Legierung, einer intermetallischen Verbindung oder einem feuerfesten Material zur Verwendung in korrodierenden Umgebungen, wie oxidierenden Medien oder gasförmigen oder flüssigen korrodierenden Mitteln, bei erhöhten Temperaturen, der mit einer gesinterten Oberflächenschutzschicht beschichtet ist, die die Widerstandsfähigkeit des Körpers gegenüber Oxidation oder Korrosion verbessert und die ebenfalls die elektrische Leitfähigkeit des Körpers und/oder dessen elektrochemische Aktivität erhöhen kann, wobei die gesinterte Schutzschicht aus einem Schlamm aufgetragen ist, der einen kolloidalen Träger enthält, der aus Siliciumdioxid, kolloidalem Aluminiumoxid, kolloidalem Yttriumoxid, kolloidalem Ceroxid, kolloidalem Thoriumdioxid, kolloidalem Zirkoniumdioxid, kolloidalem Magnesiumoxid, kolloidalem Lithiumoxid und Mischungen davon ausgewählt ist, wobei der Schlamm außerdem partikuläre reagierende oder nicht-reagierende Substanzen oder eine Mischung aus partikulären reagierenden und nicht-reagierenden Substanzen enthält, wobei die reagierenden Substanzen reagieren, um feuerfeste Boride, Silicide, Nitride, Carbide, Phosphide, Oxide, Aluminide, Metallegierungen, intermetallische Verbindungen und Mischungen davon, von Titan, Zirkonium, Hafnium, Vanadium, Silicium, Niob, Tantal, Nickel, Molybdän und Eisen herzustellen, wobei die reagierenden Substanzen feinverteilte Partikel umfassen, die Elemente umfassen, die das hergestellte feuerfeste Material bilden, und wobei die nicht-reagierenden Substanzen feuerfeste und/oder keramische Boride, Carbide, Nitride, Silicide, Oxide, Oxynitride und Mischungen davon umfassen, wobei die reagierenden und/oder nicht-reagierenden Substanzen durch Erhitzen des Körpers auf eine ausreichend erhöhte Temperatur reaktionsgesintert und/oder ohne Reaktion gesintert sind, um die gesinterte Schutzschicht durch Reaktionssintern und/oder Sintern ohne Reaktion zu bilden.

2. Beschichteter Körper nach Anspruch 1, wobei der Körper aus kohlenstoffhaltigem Material hergestellt ist.

3. Beschichteter Körper nach Anspruch 2, wobei das kohlenstoffhaltige Material ausgewählt ist aus Ölkoks, Hüttenkoks, Anthrazit, Graphit, amorphem Kohlenstoff, Fullerenen, Kohlenstoff mit niedriger Dichte oder Mischungen davon.

4. Beschichteter Körper nach Anspruch 1, der aus einem aufgebrachten Schlamm erhalten ist, der mikropyretische reagierende Substanzen enthält, die eine anhaltende mikropyretische Reaktion eingehen.

5. Beschichteter Körper nach einem der vorhergehenden Ansprüche, der aus mikropyretischen reagierenden Substanzen erhalten ist, die Partikel, Fasern oder Folien aus Ni, Al, Ti, B, Si, Nb, C, $Cr_2O_3$, Zr, Ta, $TiO_2$, $B_2O_3$, Fe, Mo oder Kombinationen davon umfassen.

6. Beschichteter Körper nach Anspruch 1, wobei der aufgebrachte Schlamm nicht-reagierende Substanzen enthält, die oberhalb einer vorgegebenen Temperatur sintern.

7. Beschichteter Körper nach Anspruch 1, wobei die nicht-reagierenden Substanzen außerdem Antioxidantien oder die Oxidation unterbindende Materialien, wie Borsäure und deren Salze sowie Fluoride; bindungsverstärkende Materialien, wie Methylcellulose, partikuläres Aluminiumoxid oder Harnstoff; metallische, intermetallische, semi-metallische oder polymere Materialien; pyrolisierbare Chlorsilane, Polycarbosilane, Polysilane und andere organometallische Polymere, die zu brauchbaren Produkten zur Oxidationsprävention oder Bindungsverstärkung pyrolisieren, oder deren pyrolisierte Produkte; wärmeaushärtende Harze; thermoplastische Harze; und Mischungen davon umfassen.

8. Beschichteter Körper nach Anspruch 7, der metallische Partikel aus Ni, Pt, Al, Cr oder intermetallische Partikel ausgewählt aus NiAl, $NiAl_3$, CrSi, CrB, oder Kombinationen davon enthält.

9. Beschichteter Körper nach Anspruch 1, wobei die nicht-reagierenden Substanzen Partikel mit einer Partikelgröße unter 100 µm sind.

10. Beschichteter Körper nach Anspruch 9, wobei die verschiedenen nicht-reagierenden partikulären Substanzen verschiedene Partikelgrößen haben, durch die das Packen der Partikel optimiert wird, wobei die Verhältnisse der Partikelgrößen im Bereich von 2:1 bis 5:1, vorzugsweise etwa 3:1 liegen.

11. Beschichteter Körper nach Anspruch 1, wobei die Beschichtung mindestens eine Silicium-enthaltende Verbindung enthält.

12. Beschichteter Körper nach Anspruch 11, wobei die Beschichtung mindestens ein Carbid, Nitrid, Borid oder Siliciumoxid oder Kombinationen davon enthält, in Kombination mit mindestens einem Silicid von Titan, Zirkonium, Hafnium, Vanadium, Niob, Tantal, Nickel, Molybdän, Chrom und Eisen, oder eine Kombination von mindestens zwei Carbiden, Nitriden, Boriden oder Siliciumoxiden.

13. Beschichteter Körper nach Anspruch 12, wobei die Beschichtung Siliciumcarbid und Molybdänsilicid oder Siliciumcarbid und Siliciumnitrid enthält.

14. Beschichteter Körper nach einem der vorhergehenden Ansprüche, wobei der kolloidale Schlamm von kolloidalen Vorläufern und Reagenzien abstammt, die Lösungen von mindestens einem Salz, wie Chloride, Sulfate, Nitrate, Chlorate, Perchlorate, oder metallorganischen Verbindungen, wie Alkoxide, Formate, Siliciumacetate, Aluminium, Yttrium, Cer, Thorium, Zirkonium, Magnesium, Lithium und anderer Metalle, und Mischungen davon sind.

15. Beschichteter Körper nach Anspruch 14, wobei der kolloidale Vorläufer oder das kolloidale Reagenz einen Chelatbildner, wie Acetylaceton oder Ethylacetoacetat, enthalten.

16. Beschichteter Körper nach Anspruch 14, wobei die Lösungen metallorganischer Verbindungen, hauptsächlich Metallalkoxide, mittels der allgemeinen Formel $M(OR)_z$ darstellbar sind, wobei M ein Metall oder Komplexkation, R eine Alkylkette und z eine Zahl von 1 bis 12 ist.

17. Bestandteil einer elektrochemischen Zelle zur Salzschmelzelektrolyse, wobei der verwendete Bestandteil einer korrodierenden Atmosphäre ausgesetzt ist, oder einem Salzschmelzelektrolyten und/oder einem Elektrolyseprodukt in der Zelle, wobei der Bestandteil einen beschichteten Körper nach einem der vorhergehenden Ansprüche umfaßt.

18. Bestandteil einer elektrochemischen Zelle nach Anspruch 17, der eine Kathode oder eine Kathodenstromzufüh-rung ist.

EP 0 633 870 B1

19. Bestandteil einer elektrochemischen Zelle nach Anspruch 17, der eine Anode oder eine Anodenstromzuführung ist.

20. Bestandteil einer elektrochemischen Zelle nach Anspruch 17, der eine bipolare Elektrode ist.

21. Bestandteil einer elektrochemischen Zelle nach Anspruch 17, wobei der Bestandteil beim Betrieb der Zelle korrodierendem oder oxidierendem Gas ausgesetzt ist, das bei Betrieb der Zelle abgegeben wird oder das unter Betriebsbedingungen in der Zelle vorhanden ist, wobei der Bestandteil einen Träger aus kohlenstoffhaltigem Material, feuerfestem Material oder einer Metallegierung enthält, der Gegenstand des Angriffs des korrodierenden oder oxidierenden Gases ist und der vor Korrosion oder Oxidation durch die Oberflächenschutzschicht geschützt ist.

22. Bestandteil einer elektrochemischen Zelle nach Anspruch 21, wobei der Bestandteil ein Träger aus Kohlenstoff mit geringer Dichte enthält, der durch das feuerfeste Material geschützt ist.

23. Verfahren zur Herstellung des beschichteten Körpers nach einem der Ansprüche 1 bis 16 oder des Bestandteils einer elektrochemischen Zelle nach einem der Ansprüche 17 bis 22, wobei das Verfahren das Aufbringen einer Schutzschicht aus dem Schlamm umfaßt, der die partikulären reagierenden oder nicht-reagierenden Substanzen oder eine Mischung der partikulären reagierenden und nicht-reagierenden Substanzen in dem kolloidalen Träger enthält, gefolgt durch Erhitzen des Körpers vor oder während der Bentzung auf eine ausreichende Temperatur, um die reagierenden und/oder nicht-reagierenden Substanzen zum Reaktionssintern und/oder zum Sintern ohne Reaktion zu bringen, um die adhärente gesinterte Schutzschicht zu bilden.

24. Verfahren nach Anspruch 23, wobei die reagierenden und/oder nicht-reagierenden Substanzen oberhalb von 900 °C Reaktionsgesintert und/oder ohne Reaktion gesintert werden.

25. Verfahren nach Anspruch 23, wobei die reagierenden und/oder nicht-reagierenden Substanzen Reaktionsgesintert und/oder ohne Reaktion gesintert werden, um vor der Benutzung eine adhärente Beschichtung des Körpers zu schaffen.

26. Verfahren nach Anspruch 23, 24 oder 25, wobei die Beschichtung durch Eintauchen des Körpers in eine Lösung, Bemalen, Besprühen oder durch Kombinationen solcher Aufbringungstechniken ein- oder mehrschichtig aufgebracht wird.

27. Verfahren nach einem der Ansprüche 23 bis 26, wobei der Körper mit den Reagenzien und Vorläufern, Gelen und/oder Kolloiden bestrichen, besprüht, eingetaucht oder getränkt wird.

28. Verfahren nach Anspruch 23 zum Schützen eines kohlenstoffhaltigen Bestandteils einer elektrochemischen Zelle zur Salzschmelzelektrolyse, wobei der verwendete Bestandteil einer korrodierenden Atmosphäre oder einem Salzschmelzelektrolyten und/oder einem Produkt der Elektrolyse in der Zelle ausgesetzt ist, wobei auf den Bestandteil eine Schutzschicht aus dem Schlamm aufgebracht wird, der partikuläre reagierende oder nicht-reagierende Substanzen in dem kolloidalen Träger oder eine Mischung der partikulären reagierenden und nicht-reagierenden Substanzen enthält, gefolgt durch Erhitzen des Bestandteils vor oder während der Benutzung auf eine Temperatur, die ausreicht, um die reagierenden und/oder nicht-reagierenden Substanzen zum Reaktionssintern und/oder zum Sintern ohne Reaktion zu bringen, um eine adhärente gesinterte Schutzschicht herzustellen.

**Revendications**

1. Corps en matériau carboné ou en métal, alliage, composé intermétallique ou matériau réfractaire, pour une utilisation dans des environnements corrosifs comme les milieux oxydants ou les agents corrosifs gazeux ou liquides à températures élevées, revêtu avec un revêtement de surface protecteur fritté qui améliore la résistance du corps à l'oxydation ou à la corrosion et qui peut aussi améliorer la conductivité électrique du corps et/ou son activité électrochimique, dans lequel le revêtement protecteur fritté est appliqué à partir d'un coulis comprenant un porteur colloïdal sélectionné parmi la silice, l'alumine colloïdale l'oxyde d'yttrium colloïdal, l'oxyde de cérium colloïdal, l'oxyde de thorium colloïdal, l'oxyde de zirconium colloïdal, l'oxyde de magnésium colloïdal, l'oxyde de lithium colloïdal, et leurs mélanges, le coulis comprenant en plus des réactifs particulaires ou des substances non-réactives, ou un mélange de réactifs particulaires et de substances non-réactives, lesquelles substances réactives réagissent pour produire des borures, des siliciures, des nitrures, des carbures, des phosphures, des oxydes, des aluminures, des alliages de métaux, des intermétalliques, et leurs mélanges, de titane, de zirconium, de hafnium, de vanadium, de silicium, de niobium, de tantale, de nickel, de molybdène et de fer, dont lesdites substances réactives comprennent des particulaires finement divisés comprenant des éléments composant le matériau réfractaire produit, et dont les substances non-réactives comprennent les borures, les carbures, les nitrures, les siliciures, les oxydes, les oxynitrures réfractaires et/ou céramiques et leurs mélanges, lesquelles substances réactives et non-réactives ont été frittées par réaction et/ou frittées sans réaction en chauffant le corps à une température suffisamment élevée pour former le revêtement protecteur fritté par réaction et/ou fritté sans réaction.

2. Un corps revêtu selon la revendication 1, dans lequel le corps est réalisé en matériau carboné.

3. Un corps revêtu selon la revendication 2, dans lequel le matériau carboné est sélectionné parmi le coke de pétrole, le coke métallurgique, l'anthracite, le graphite, le carbone amorphe, le fullerène, le carbone à faible densité ou leurs mélanges.

4. Un corps revêtu selon la revendication 1, obtenu à partir d'un coulis appliqué qui contient des substances réactives micropyrétiques qui subissent une réaction micropyrétique soutenue.

5. Un corps revêtu selon n'importe quelle revendication précédente, obtenu à partir de substances réactives micropyrétiques comprenant des particules, des fibres ou des feuilles de Ni, Al, Ti, B, Si, Nb, C, $Cr_2O_3$, Zr, Ta, $TiO_2$, $B_2O_3$, Fe, Mo, ou leurs combinaisons.

6. Un corps revêtu selon la revendication 1, dans lequel le coulis appliqué contient des substances non-réactives qui frittent au-dessus d'une température donnée.

7. Un corps revêtu selon la revendication 1, dans lequel les substances non-réactives contiennent en plus des matériaux anti-oxydants ou prévenant l'oxydation comme l'acide borique et ses sels, et les fluorures; des matériaux améliorant l'adhésion comme la méthyle-cellulose, l'alumine particulaire ou l'urée; des matériaux métalliques, intermétalliques, semi-métalliques ou polymères; des chlorosilanes pyrolisables, des polycarbosilanes, des polysilanes et d'autres polymères organométalliques qui pyrolisent en produits utiles pour la prévention de l'oxydation ou pour l'amélioration de l'adhésion, ou leurs produits pyrolisés; des résines thermodurcissables; des résines thermoplastiques; et leurs mélanges.

8. Un corps revêtu selon la revendication 7, contenant des particules métalliques de Ni, Pt, Al, Cr ou des particules intermétalliques sélectionnées parmi NiAl, $NiAl_3$, CrSi, CrB, ou leurs combinaisons.

9. Un corps revêtu selon la revendication 1, dans lequel les substances non-réactives sont particulaires avec une taille de particules inférieure à 100 $\mu$m.

10. Un corps revêtu selon la revendication 9, dans lequel les différentes substances particulaires non-réactives ont des tailles de particules différentes qui optimisent l'entassement des particules, lesquels rapports de tailles de particule sontdans l'intervalle de 2:1 à 5:1, préférablement environ 3:1.

11. Un corps revêtu selon la revendication 1, dans lequel le revêtement contient au moins un composé contenant du silicium.

12. Un corps revêtu selon la revendication 11, dans lequel le revêtement contient au moins un carbure, nitrure, borure ou oxyde de silicium ou leurs combinaisons, en combinaison avec au moins un siliciure de titane, zirconium, hafnium, vanadium, niobium, tantale, nickel, molybdène, chrome et fer, ou une combinaison d'au moins deux carbures, nitrures, borures ou oxydes de silicium.

13. Un corps revêtu selon la revendication 12, dans lequel le revêtement contient du carbure de silicium et du siliciure de molybdène ou du carbure de silicium et du nitrure de silicium.

14. Un corps revêtu selon n'importe quelle revendication précédente, dans lequel le coulis colloïdal est dérivé de précurseurs colloïdaux et de réactifs qui sont des solutions d'au moins un sel comme les chlorures, les sulfates, les nitrates, les chlorates, les perchlorates, ou de composés métal organiques comme les alkoxydes, les formates, les acétates de silicium, d'aluminium, d'yttrium, de cérium, de thorium, de zirconium, de magnésium, de lithium et d'autres métaux et leurs mélanges.

**15.** Un corps revêtu selon la revendication 14, dans lequel le précurseur colloïdal ou le réactif colloïdal contiennent un agent chelateur comme l'acétyl acétone ou l'éthylacétoacétate.

**16.** Un corps revêtu selon la revendication 14, dans lequel les solutions de composés métal organiques, principalement les alkoxydes de métaux, sont de formule générale $M(OR)_z$ où M est un métal ou un cation complexe, R est une chaîne alkyle, et z est un nombre de 1 à 12.

**17.** Un composant d'une cellule électrochimique pour l'électrolyse de sel fondu, lequel composant pendant l'utilisation est exposé à une atmosphère corrosive, ou à un électrolyte de sel fondu et/ou à un produit de l'électrolyse dans la cellule, le composant comprenant un corps revêtu comme revendiqué dans n'importe quelle revendication précédente.

**18.** Un composant de cellule électrochimique selon la revendication 17, qui est une cathode ou une alimentation en courant de cathode.

**19.** Un composant de cellule électrochimique selon la revendication 17, qui est une anode ou une alimentation en courant d'anode.

**20.** Un composant de cellule électrochimique selon la revendication 17, qui est une électrode bipolaire.

**21.** Un composant de cellule électrochimique selon la revendication 17, dans lequel le composant de la cellule lors du fonctionnement est exposé au gaz corrosif ou oxydant dégagé lors du fonctionnement de la cellule ou présent dans la cellule dans les conditions de fonctionnement de la cellule, ledit composant comprenant un substrat en matériau carboné, en matériau réfractaire ou en alliage de métal qui est soumis à l'attaque par le gaz corrosif ou oxydant et est protégé de la corrosion ou de l'oxydation par le revêtement de surface protecteur.

**22.** Un composant de cellule électrochimique selon la revendication 21, dans lequel le composant possède un substrat en carbone de faible densité protégé par le matériau réfractaire.

**23.** Une méthode de production du corps revêtu selon n'importe laquelle des revendications 1 à 16, ou le composant de cellule électrochimique de n'importe laquelle des revendications 17 à 22, la méthode comprenant l'application au corps d'un un revêtement protecteur dudit coulis contenant lesdites substances particulaires réactives ou non-réactives, ou un mélange desdites substances réactives ou non-réactives particulaires dans ledit porteur colloïdal, suivi par le chauffage du corps avant ou pendant l'utilisation à une température suffisante pour provoquer le frittage par réaction et/ou le frittage sans réaction pour former le revêtement protecteur fritté adhérant.

**24.** Une méthode selon la revendication 23, dans laquelle les substances réactives et/ou non-réactives sont frittées par réaction ou frittées sans réaction au-dessus de 900°C.

**25.** Une méthode selon la revendication 23, dans laquelle les substances réactives et/ou non-réactives sont frittées par réaction ou frittées sans réaction pour fournir un revêtement adhérant sur le corps avant utilisation.

**26.** Une méthode selon la revendication 23, 24 ou 25, dans laquelle le revêtement est appliqué en plongeant le corps dans une solution, par peinture, par giclage ou par une combinaison de ces techniques d'application en revêtement à simple ou à multiples couches.

**27.** Une méthode selon n'importe laquelle des revêtements 23 à 26, dans laquelle le corps est en plus peint, giclé, plongé ou infiltré avec des réactifs et des précurseurs, des gels et/ou des colloïdes.

**28.** Une méthode selon la revendication 23 de protection d'un composant carboné d'une cellule électrochimique pour pour l'électrolyse de sel fondu dont le composant pendant l'utilisation est exposé à une atmosphère corrosive, ou à un électrolyte de sel fondu et/ou à un produit de l'électrolyse dans la cellule, comprenant l'application sur le composant d'un revêtement protecteur à partir dudit coulis contenant des substances réactives et/ou non-réactives particulaires dans ledit porteur colloïdal, ou un mélange de substances réactives et/ou non-réactives particulaires, suivi par un chauffage du composant avant ou pendant l'utilisation à une température suffisante pour causer le frittage par réaction et/ou le frittage sans réaction des substances réactives et/ou non-réactives particulaires pour former un revêtement protecteur fritté adhérant.